## Europäisches Patentamt
## European Patent Office
## Office européen des brevets

(19)

(11) Numéro de publication: **0 116 005**
**B1**

(12)
# FASCICULE DE BREVET EUROPÉEN

(45) Date de publication du fascicule du brevet:
04.01.89

(51) Int. Cl.⁴: **E 03 B 7/12,** F 24 J 3/08, F 28 D 15/00

(21) Numéro de dépôt: 84450001.7

(22) Date de dépôt: 03.01.84

(54) **Dispositif de protection contre le gel de compteurs d'eau et de prises d'eau.**

(30) Priorité: 06.01.83 FR 8300245
24.06.83 FR 8313744

(43) Date de publication de la demande:
15.08.84 Bulletin 84/33

(45) Mention de la délivrance du brevet:
04.01.89 Bulletin 89/1

(84) Etats contractants désignés:
AT BE CH DE FR GB IT LI LU NL SE

(56) Documents cité:
DE-A-3 037 721
DE-A-3 123 602
FR-A-2 191 861
US-A-2 932 313
US-A-2 937 009
US-A-3 195 619
US-A-4 279 294

(73) Titulaire: **Persohn, Paul, "Le Rey", F-33430 Bazas (FR)**
Titulaire: **Persohn, Philippe, "Le Rey", F-33430 Bazas (FR)**

(72) Inventeur: **Persohn, Paul, "Le Rey", F-33430 Bazas (FR)**
Inventeur: **Persohn, Philippe, "Le Rey", F-33430 Bazas (FR)**

(74) Mandataire: **Thébault, Jean- Louis, Cabinet Thébault S.A. 50 Cours de Verdun, F-33000 Bordeaux (FR)**

# Description

La présente invention concerne la protection active contre le gel d'installations de stockage ou fourniture d'eau et en particulier de compteurs d'eau et de prises d'eau.

Traditionnellement la protection contre le gel se fait par apport de calories d'origine électrique, ou vidange des volumes exposés, ou isolation thermique. Dans les deux derniers cas, l'utilisation des appareils protégés est retardée par des manipulations supplémentaires, parfois compliquées et astreignantes.

La protection par vidange impose une autre vidange. La protection par isolation thermique impose un déshabillage de certaines parties pour en avoir l'accès. Dans la version aérienne des robinets de puisage, seul le rapport entre l'inertie thermique du matériel employé et la qualité de l'isolation permet de présumer de la protection obtenue. Ceci explique que les longues périodes de gel viennent à bout de ce type de protection. Les limites de ce type de protection reculent avec l'emploi de matériels semi-enterrés ou enterrés.

On a déjà pensé à utiliser le principe du caloduc en particulier pour la protection de robinets de puisage. Ce type d'application est connu par le brevet US N° 2 937 009 qui décrit l'insertion d'un caloduc à l'intérieur de la colonne montante d'un robinet de puisage.

Toutefois, une telle solution comporte divers inconvénients dont certains sont importants et non négligeables.

Le but de l'invention est de proposer un dispositif amélioré plus spécifiquement adapté aux compteurs d'eau et aux prises d'eau.

A cet effet, l'invention a pour objet un dispositif de protection contre le gel de compteurs d'eau et de prises d'eau, du type à caloduc comprenant intérieurement un système de répartition du ruissellement des condensats et étant réalisé de façon qu'une des extrémités dudit caloduc est disposée dans le sol à une distance de la surface suffisante pour que la température à cet endroit soit toujours supérieure à 0°C, cependant que l'autre extrémité est disposée au droit de la partie à protéger située au-dessus de la ligne de gel, ledit dispositif étant caractérisé en ce qu'il comporte deux caloducs comprenant chacun une partie supérieure solidaire de la face interne d'un boîtier amovible en matériau isolant thermique susceptible de coiffer le compteur ou prise d'eau avec les parties non enterrées des colonnes d'approvisionnement en eau, et une partie inférieure engagée dans un conduit vertical enterré rempli d'eau recouverte d'huile et éventuellement muni extérieurement d'ailettes thermiques.

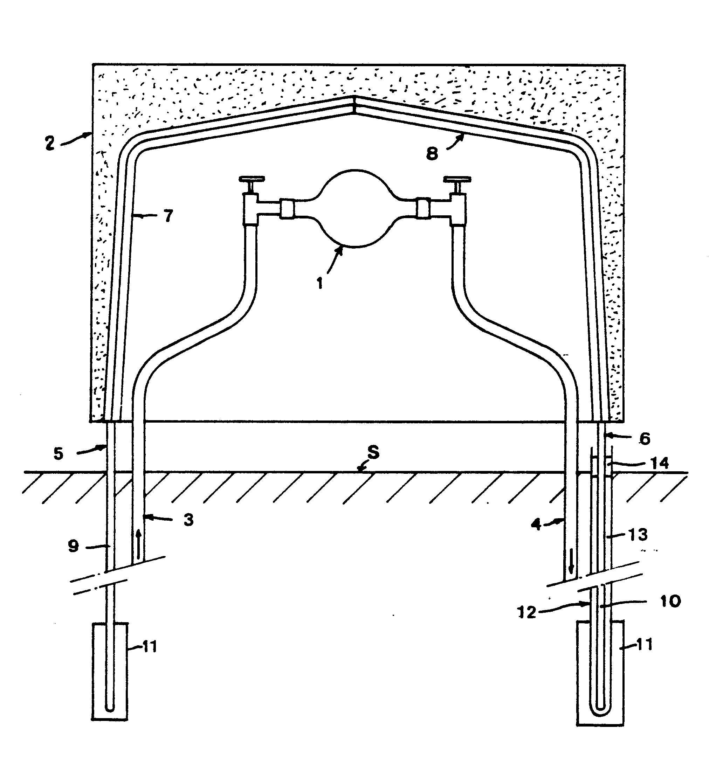

D'autres caractéristiques et avantages de l'invention ressortiront de la description qui va suivre d'un mode de réalisation du dispositif de l'invention, description donnée à titre d'exemple uniquement et en regard du dessin annexé sur lequel la figure unique représente une vue en coupe verticale axiale d'un dispositif selon l'invention, appliqué à un compteur d'eau.

La figure unique illlustre un mode de réalisation du dispositif de l'invention suivant lequel un compteur d'eau 1 est protégé par des caloducs entourant la partie de l'ensemble au dessus du sol S.

A cet effet, il est prévu un boîtier parallélépipédique 2 garni de matériau isolant thermique, fermé et isolé à sa partie inférieure et coiffant le compteur 1, la colonne montante 3 d'alimentation du compteur et la colonne descendante 4.

Un des côtés verticaux du boîtier 2 est muni d'une porte d'accès (non représentée). Sur la face interne du boîtier 2 sont fixés par tous moyens appropriés deux caloducs 5 et 6 disposés en vis-à-vis en regard des colonnes 3 et 4 et du compteur 1.

Chaque caloduc comprend une partie 7 et 8 en forme d'équerre plaquée contre le boîtier 2 et prolongée extérieurement en direction du sol par un conduit tubulaire 9, 10.

Les parties 7 et 8 des caloducs sont réalisées suivant la technique bien connue du "roll-bond" et sont des éléments rectangulaires plats par exemple d'une largeur d'une quinzaine de centimètres et coudés pour être adaptés au boîtier 2.

A cet effet, le circuit de circulation du fluide dans le caloduc est délimité entre deux feuilles métalliques appliquées l'une contre l'autre et déterminant entre elles des conduits ramifiés communiquant avec le reste du caloduc. Avantageusement la face externe de ce circuit est revêtue d'un isolant thermique.

Les éléments 7, 8 sont raccordés à leur extrémité inférieure aux tubes 9 et 10.

Conformément à l'invention (mode de mise en place du type 10, partie droite de la figure) ledit tube 10 est engagé dans une sorte de tube-éprouvette métallique 12 enterré verticalement et éventuellement muni d'une ailette thermique 11.

Le tube 12 est rempli d'eau 13 avec un peu d'huile 14 à la surface pour éviter l'évaporation de l'eau. Avec un tel agencement la mise en place et l'enlèvement du boîtier 2 avec ses caloducs sont particulièrement rapides et aisés.

Il est à noter que les parties 7 et 8 des caloducs réalisées suivant la technique du "roll-bond" peuvent être remplacées par une structure à ailette ramifiée ou non telle que la partie inférieure du caloduc 5.

# Revendications

1. Dispositif de protection contre le gel de compteurs d'eau et de prises d'eau, du type à caloduc comprenant intérieurement un système de répartition du ruissellement des condensats et étant réalisé de façon qu'une des extrémités dudit caloduc est disposée dans le sol à une distance de la surface suffisante pour que la température à cet endroit soit toujours supérieure à 0°C, cependant que l'autre extrémité est disposée au droit de la partie à protéger située au-dessus de la ligne de gel, ledit dispositif étant caractérisé en ce qu'il comporte deux caloducs (5, 6) comprenant chacun une partie supérieure (7, 8) solidaire de la face interne d'un boîtier amovible (2) en matériau isolant thermique susceptible de coiffer le compteur (1) ou prise d'eau avec les parties non enterrées des colonnes (3, 4) d'approvisionnement en eau, et une partie inférieure (10) engagée dans un conduit vertical enterré (12) rempli d'eau (13) recouverte d'huile (14) et éventuellement muni extérieurement d'ailettes thermiques (11).

2. Dispositif suivant la revendication 1, caractérisé en ce que les parties supérieures des caloducs comportent au moins une ailette de diffusion thermique.

3. Dispositif suivant la revendication 1, caractérisé en ce que les parties supérieures des caloducs sont réalisées suivant la technique du "roll-bond".

**Patentansprüche**

1. Vorrichtung vom Wärmeleittyp zum Frostschutz von Wasserzählern und Wasserzapfstellen, umfassend im Inneren ein System zum Verteilen der Kondensatbenetzung und in der Weise realisiert, daß eines der Enden des besagten Wärmeleiters im Boden in einem Abstand zur Oberfläche angeordnet ist, der ausreicht, damit die Temperatur an dieser Stelle immer über 0°C liegt, während jedoch das andere Ende an der Stelle des zu schützenden Teils, das sich über der Frostgrenze befindet, angeordnet ist, dadurch gekennzeichnet, daß sie zwei Wärmeleiter (5, 6) aufweist, die jeweils einen oberen Abschnitt (7, 8), der an der Innenseite eines abnehmbaren Gehäuses (2) aus thermisch isolierendem Material befestigt ist, das geeignet ist, den Zähler (1) oder die Zapfstelle mit den nicht in der Erde verlegten Teilen von Wasserversorgungsleitungen (3, 4) abzudecken, und einen Innenteil (10) aufweisen, der mit einer vertikalen, in der Erde verlegten Leitung (12) in Eingriff steht, die mit Wasser (13) gefüllt, das mit Öl (14) abgedeckt ist, und gegebenenfalls mit sich auswärts erstreckenden, thermischen Rippen (11) versehen ist.

2. Vorrichtung gemäß Anspruch 1, dadurch gekennzeichnet, daß die oberen Abschnitte der Wärmeleiter wenigstens eine Rippe zur thermischen Diffusion aufweisen.

3. Vorrichtung gemäß Anspruch 1, dadurch gekennzeichnet, daß die oberen Abschnitte der Wärmeleiter mittels der "Roll-Bond"-Technik verwirklicht sind.

**Claims**

1. A device for protecting water meters and hydrants from freezing, of the heat transfer tube type, comprising, internally, a distribution system for the trickling of the condensates and being constructed in such a manner that one of the ends of said heat transfer tube is disposed in the ground at a sufficient distance from the surface for the temperature at this point to be always higher than 0°C, while the other end is disposed in line with the portion to be protected situated above the freezing line, said device being characterised in that it comprises two heat transfer tubes (5, 6) each comprising an upper portion (7, 8) rigidly connected to the internal face of a removable case (2) of thermal insulating material adapted to cover the meter (1) or hydrant with the portions of the water supply columns (3, 4) not buried in the ground, and a lower portion (10) engaged in a vertical conduit (12) which is buried in the ground, filled with water (13) covered with oil (14) and possibly equipped externally with thermal fins (11).

2. A device according to Claim 1, characterised in that the upper portions of the heal transfer tubes comprise at least one thermal diffusion fin.

3. A device according to Claim 1, characterised in that the upper portions of the heat transfer tubes are produced by the "roll-bond" technique.